# EUROPÄISCHE PATENTSCHRIFT

(11) **EP 2 864 169 B1**
(45) Veröffentlichungstag und Bekanntmachung des Hinweises auf die Patenterteilung: **30.10.2019**
(21) Anmeldenummer: 13730548.8
(22) Anmeldetag: 19.06.2013
(51) Int. Cl.: B60T 17/08, F16K 15/14, F16K 17/18, F15B 15/10

(54) **FEDERSPEICHERBREMSZYLINDER MIT KOMBINIERTEM EINLASS UND AUSLASSMEMBRANVENTIL**
SPRING BRAKE CYLINDER HAVING COMBINED INLET AND OUTLET DIAPHRAGM VALVE
CYLINDRE DE FREIN À RESSORT ACCUMULATEUR MUNI D'UNE SOUPAPE COMBINÉE À MEMBRANE D'ENTRÉE ET DE SORTIE

(30) Priorität: 22.06.2012 DE 102012012491
(43) Veröffentlichungstag der Anmeldung: 29.04.2015
(73) Patentinhaber: KNORR-BREMSE Systeme für Nutzfahrzeuge GmbH, 80809 München (DE)
(72) Erfinder: DEROUAULT, Sylvain, F-14100 Hermival les Vaux (FR); LEBIGRE, Hervé, F-14290 Saint Julien de Mailoc (FR)
(86) Internationale Anmeldenummer: PCT/EP2013/062739
(87) Internationale Veröffentlichungsnummer: WO 2013/189981

(56) Entgegenhaltungen:
- EP-A1- 1 065 118
- DE-A1- 1 505 574
- DE-A1- 3 016 201
- US-B1- 6 389 954

## Beschreibung

Die Erfindung geht aus von einem Federspeicherbremszylinder für Bremsanlagen von Fahrzeugen, gemäß dem Oberbegriff von Anspruch 1.

Aus dem Stand der Technik, beispielsweise aus DE-A-1 505 574 sind Federspeicherbremszylinder mit Entlüftungseinrichtungen bekannt, bei welchen an der Außenwand des Federspeicherbremszylinders innerhalb eines zusätzlichen Gehäuses ein Membranventilmechanismus vorgesehen ist, um eine Verbindung zwischen der der Federspeicherbremskammer und der Federkammer herzustellen, wenn der Federspeicherbremskolben beim Zuspannen des Federspeicherbremszylinders durch die Speicherfeder verschoben wird. Das dabei sich vergrößernde Volumen der Federkammer lässt dort einen Unterdruck entstehen, welcher durch den Membranventilmechanismus abgebaut wird, d.h. dieser belüftet während der Verschiebung des Federspeicherbremskolbens die Federkammer mit aus der Federspeicherbremskammer stammender Druckluft. Beim Lösen des Federspeicherbremszylinders sperrt der Membranventilmechanismus die genannte Verbindung, wobei die Druckluft in der dann komprimierten Federkammer über ein zusätzliches Atmungsventil in einer Durchgangsbohrung im Boden des Federspeicherbremszylinders in die Atmosphäre abgeblasen wird. Somit wird ein relativ hoher Aufwand getrieben, um eine Be- und Entlüftung der Federkammer des Federspeicherbremszylinders zu realisieren.

In EP 1 065 118 A1 wird ein Filtereinsatz für einen Federspeicherbremszylinder beschrieben, bei welchem ein Haltekäfig einer flexiblen öl- und wasserabweisende Membrane mittels eines flexiblen Haltekörpers in einer Durchgangsöffnung im Boden des Federspeicherbremszylinder gehalten ist. US 6 389 954 B1 beschreibt einen Filtereinsatz für Atmungsöffnungen von Federspeicherbremszylindern, welcher mittels eines mit einer axialen Durchgangsbohrung versehenen Haltestifts in einer Atmungsbohrung gehalten ist. Der Filtereinsatz beinhaltet ebenfalls eine Filtermembrane.

Ein gattungsgemäßer Federspeicherbremszylinder ist aus DE 30 16 201 A1 bekannt. Dort ist ein an einem Boden des Federspeicherbremszylinders angeordneter, von diesem Boden in den Innenraum der die Speicherfeder aufnehmenden Federkammer weisender Haltestift zum Halten einer Atmungseinrichtung vorhanden. Die Atmungseinrichtung beinhaltet ein Scheibenpaket bestehend aus einer inneren elastischen und kreisförmigen Scheibe und zwei diese innere Scheibe zwischen sich haltenden starren Scheiben. Die starren Scheiben weisen jeweils einen abgeschnittenen Abschnitt auf, durch welchen sich jeweils ein Abschnitt der elastischen Scheibe von einem eine Durchgangsöffnung in der jeweils anderen Scheibe begrenzenden Sitz abheben kann, wenn der Druck im Inneren der Federkammer einen Grenzdruck über- oder unterschreitet. Probleme bereiten dann vor allem die Montage und ein Auswechseln der Atmungseinrichtung.

Der vorliegenden Erfindung liegt demgegenüber die Aufgabe zugrunde, einen Federspeicherbremszylinder der eingangs erwähnten Art derart weiter zu entwickeln, dass die Atmungseinrichtung einen geringen Montage- und Demontageaufwand erfordert.

Diese Aufgabe wird erfindungsgemäß durch die Merkmale von Anspruch 1 gelöst.

### Offenbarung der Erfindung

Die Erfindung geht davon aus, dass die Atmungseinrichtung als Membranventil mit wenigstens einer elastisch beweglichen Auslassmembran und wenigstens einer elastisch beweglichen Einlassmembran ausgebildet ist, wobei sich die Einlassmembran und die Auslassmembran in ihrer Grundstellung in einer in Kontakt mit einem zugeordneten Ventilsitz gekennzeichneten Schließstellung befinden und bei Vorliegen von jeweils einer einen Mindestdruckwert überschreitenden Druckdifferenz zwischen der Federkammer und der Atmosphäre in eine von dem Ventilsitz abgehobene Öffnungsstellung zum Druckaufbau und Druckabbau in der Federkammer gesteuert sind.

Der Mindestdruckwert wird oder ist erreicht, wenn sich das Volumen der Federkammer beim Lösen des Federspeicherbremszylinders verkleinert bzw. beim Zuspannen des Federspeicherbremszylinders vergrößert. Dann wird die Auslassmembran von ihrer Schließstellung in die Öffnungsstellung bewegt, wenn sich das Volumen der Federkammer beim Lösen des Federspeicherbremszylinders verkleinert und die Einlassmembran von ihrer Schließstellung in die Öffnungsstellung bewegt wird, wenn sich das Volumen der Federkammer beim Zuspannen des Federspeicherbremszylinders vergrößert.

Die Belüftung der Federkammer beim Zuspannen des Federspeicherbremszylinders erfolgt dann nicht mehr durch Druckluft aus der Federspeicherbremskammer sondern aus der Atmosphäre, wodurch die Atmungseinrichtung sehr einfach und kostengünstig aufgebaut ist.

Erfindungsgemäß sind die wenigstens eine Einlassmembran und die wenigstens eine Auslassmembran mit einem in einer zentralen Durchgangsöffnung im Boden der Federkammer gehaltenen Grundkörper verbunden. Dann kann der Grundkörper zusammen mit der wenigstens einen Einlassmembran und der wenigstens einen Auslassmembran als vormontierte Einheit am Federspeicherbremszylinder montiert werden.

Weiterhin erfindungsgemäß ist der Grundkörper aus einem elastischen Material einstückig ausgebildet, mit einem Halteabschnitt, welcher unter elastischer Verformung in einer zugeordneten Durchgangsöffnung im Boden des Federspeicherzylinders formschlüssig montierbar ist, wobei am Grundkörper ein Haltekörper beispielsweise in Form eines Haltestifts gehalten ist, an welchen die wenigstens eine Einlassmembran und/oder die wenigstens eine Auslassmembran angeformt ist, welche mit wenigstens einer in dem Grundkörper ausgebildeten Verbindungsöffnung zwischen der Federkammer und der Atmosphäre jeweils als Membranventil zusammen wirkt.

Durch die in den Unteransprüchen aufgeführten Maßnahmen sind vorteilhafte Weiterbildungen und Verbesserungen der in den unabhängigen Ansprüchen angegebenen Erfindung möglich.

Besonders sind die wenigstens eine Einlassmembran und die wenigstens eine Auslassmembran räumlich getrennt voneinander ausgebildet, wobei der Einlassmembran und der Auslassmembran jeweils ein eigener Ventilsitz zugeordnet ist. Dann kann die Einlass- bzw. Auslasscharakteristik individuell an die herrschenden Druckverhältnisse angepasst werden.

Gemäß einer Weiterbildung kann vorgesehen sein, dass der aus einem elastischen Material bestehende Grundkörper in der zentralen Durchgangsöffnung im Boden der Federkammer mittels eines einen hinterschnittenen Querschnitt aufweisenden Halteabschnitts formschlüssig gehalten ist, wobei sich der Halteabschnitt beim Einsetzen des Grundkörpers in die Durchgangsöffnung von außen her elastisch verformt und im montiertem Endzustand einen inneren Rand der Durchgangsöffnung übergreifend ins Innere der Federkammer hinein ragt. Dadurch wird eine sehr einfache Art der Montage des Grundkörpers am Federspeicherbremszylinder zur Verfügung gestellt.

Hierzu kann der Halteabschnitt des Grundkörpers kegelförmig ausgebildet sein und sich zum Inneren der Federkammer hin verjüngen.

Ferner kann die wenigstens eine Einlassmembrane an einer ins Innere der Federkammer weisenden Bodenfläche des Grundkörpers und die wenigstens eine Auslassmembran an einer nach außen weisenden Außenfläche des Grundkörpers angeordnet sein, wobei die wenigstens eine Einlassmembrane und die wenigstens eine Auslassmembrane mit mehreren Verbindungsöffnungen zwischen der Federkammer und der Atmosphäre dichtend zusammenwirken.

Dabei kann gemäß einer ersten Ausführungsform wenigstens eine Verbindungsöffnung in dem Boden des Federspeicherbremszylinders und wenigstens eine Verbindungsöffnung in dem Grundkörper ausgebildet sein. Dabei kann die wenigstens eine Verbindungsöffnung im Boden beispielsweise mit der wenigstens einen Auslassmembran und die wenigstens eine Verbindungsöffnung in dem Grundkörper mit der wenigstens einen Einlassmembran zusammen wirken.

Gemäß einer zweiten Ausführungsform können die Verbindungsöffnungen auch allesamt in dem Grundkörper ausgebildet sein, wobei dann die wenigstens eine Einlassmembran mit einer Verbindungsöffnung oder mit einer Gruppe von Verbindungsöffnungen und die wenigstens eine Auslassmembran mit einer weiteren Verbindungsöffnung oder einer weiteren Gruppe von Verbindungsöffnungen zusammen wirken. Diese zweite Ausführungsform hat den Vorteil, dass solche Verbindungsöffnungen in einem vom Federspeicherbremszylinder getrennten Grundkörper einfacher vorgefertigt werden als in dem Federspeicherbremszylinder selbst.

Besonders bevorzugt ist die wenigstens eine Einlassmembran mit einem im Grundkörper gehaltenen Haltestift verbunden und ragt von dem Haltestift radial rechtwinkelig weg.

Gemäß der ersten Ausführungsform kann die Einlassmembrane als mit aus einem elastischen Material hergestellten Haltestift einstückige Tellermembrane ausgebildet sein, welche von einem ins Innere der Federkammer weisenden Ende des Haltestifts nach radial außen wegragend einen freien Tellermembranrand ausbildet, welcher mit mehreren vom Haltestift radial beabstandeten Verbindungsöffnungen im Grundkörper dichtend zusammenwirkt.

Dabei ist der Haltestift beispielsweise eine zentrale Durchgangsbohrung des Grundkörpers durchragend mit einem im Querschnitt erweiterten und nach außen weisenden Kopfstück im Grundkörper formschlüssig gehalten, wobei sich das Kopfstück und/oder der Grundkörper beim Einsetzen des Haltestifts in die Durchgangsbohrung des Grundkörpers elastisch verformt, um im montiertem Endzustand einen äußeren Rand der Durchgangsbohrung des Grundkörpers formschlüssig zu übergreifen. Dadurch kann der Haltestift zusammen mit der Einlassmembran durch Einstecken in die zentrale Durchgangsbohrung des Grundkörpers auf einfache Weise montiert werden.

Bei manchen Federspeicherbremszylindern ist am Boden des Gehäuses des Federspeicherbremszylinders eine ringförmige Vertiefung angeformt, welche zum Zentrieren der Speicherfeder in der Federkammer dient. Weiterhin kann es bei einer entsprechenden Baugröße der Federkammer notwendig sein, die Federkammer beim Lösen und Zuspannen des Federspeicherbremszylinders mit einem relativ großen Luftvolumen zu Be- und Entlüften. Dann kann der durch die Verbindungsöffnungen in dem Grundkörper vorhandene Querschnitt nicht ausreichend sein, um das zu- bzw. abzuführende Luftvolumen zu transportieren.

Bei der ersten Ausführungsform ist daher die wenigstens eine Auslassmembran an einem eine ringförmige Vertiefung in einer Außenfläche des Bodens des Federspeicherbremszylinders überbrückenden Steg des Grundkörpers endseitig ausgebildet ist und mit wenigstens einem äußeren Ventilsitz am Rand wenigstens einer Verbindungsöffnung im Boden des Federspeicherbremszylinders zusammenwirkt, wobei der Steg und die wenigstens eine Auslassmembran mit dem Grundkörper einstückig ausgeführt sind. Dann stellt die wenigstens eine Verbindungsöffnung im Boden im Gegensatz zu den Verbindungsöffnungen im Grundkörper, welche dann ausschließlich zur Belüftung der Federkammer dienen, einen Entlüftungsquerschnitt zur Verfügung.

Dabei kann der Steg zwischen der Auslassmembrane und der Vertiefung im Boden des Federspeicherbremszylinders am Boden durch einen vom Steg wegragenden und in einer Bohrung im Boden formschlüssig gehalterten Zapfen gehalten sein. Hierdurch ist der Grundkörper zusammen mit dem Steg und der am Steg ausgebildeten Auslassmembran sicher am Federspeicherbremszylinder gehalten. Weiterhin kann der Grundkörper zusammen mit dem Steg und der Auslassmembran am Federspeicherbremszylinder durch paralleles Einstecken des Halteabschnitts (siehe oben) und des Zapfens in die zugehörigen Öffnungen im Boden des Federspeicherbremszylinders auf einfache Weise montiert werden.

Gemäß der zweiten Ausführungsform kann die wenigstens eine Einlassmembrane und die wenigstens eine Auslassmembrane im Querschnitt gesehen gegenläufig vom Haltestift nach radial außen weg ragen und mit diametral gegenüberliegenden Verbindungsöffnungen im Grundkörper zusammenwirken.

Weiterhin kann bei dieser zweiten Ausführungsform vorgesehen sein, dass am Haltestift jeweils endseitig Einschnürungen und im Durchmesser demgegenüber vergrößerte Kopfstücke einstückig ausgebildet sind, wobei die Kopfstücke durch Öffnungen der Einlassmembran und der Auslassmembran unter elastischer Verformung gesteckt sind, zur Ausbildung jeweils eines Formschlusses mit hinterschnittenem Querschnitt zwischen Haltestift einerseits und Einlassmembran und Auslassmembran andererseits, und wobei die derart am Haltestift befestigte Einlassmembrane und Auslassmembrane zugleich eine Axialsicherung für den Haltestift in der Durchgangsbohrung des Grundkörpers ausbilden. Auch diese Maßnahmen tragen sehr zu einer einfachen und kostengünstigen Herstellung und Montage des Federspeicherbremszylinders bei.

Der erfindungsgemäße Federspeicherbremszylinder kann als separater Federspeicherbremszylinder ausgeführt oder aber als Bestandteil eines kombinierten Betriebsbrems- und Federspeicherbremszylinders für pneumatische oder elektro-pneumatische Bremsanlagen von Fahrzeugen vorgesehen sein.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Querschnittsdarstellung eines Teils eines Federspeicherbremszylinders mit einer Atmungseinrichtung gemäß einer ersten Ausführungsform der Erfindung;
- Fig.2: eine Querschnittsdarstellung eines Teils eines Federspeicherbremszylinders mit einer Atmungseinrichtung gemäß zweiten Ausführungsform der Erfindung;
- Fig.3: eine perspektivische Darstellung der Atmungseinrichtung von Fig.1;
- Fig.4: eine weitere perspektivische Darstellung der Atmungseinrichtung von Fig.1
- Fig.5: eine Querschnittsdarstellung des Federspeicherbremszylinders mit der Atmungseinrichtung von Fig.1 während der Entlüftung;
- Fig.6: eine Querschnittsdarstellung des Federspeicherbremszylinders mit der Atmungseinrichtung von Fig.1 während der Belüftung.

### Beschreibung der Ausführungsbeispiele

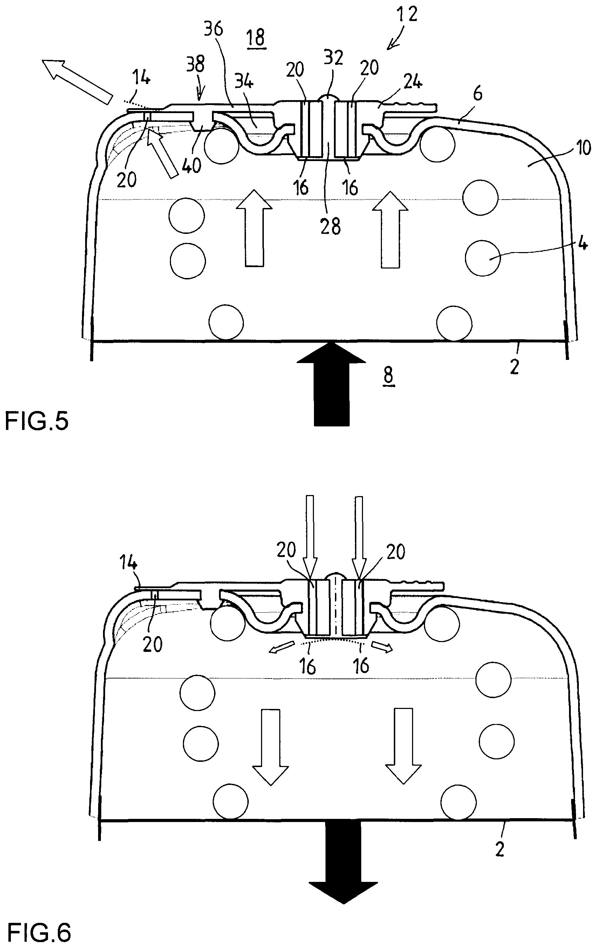

In Fig.5 und Fig.6 ist ein Federspeicherbremszylinder 1 bevorzugt als Teil eines kombinierten Betriebsbrems- und Federspeicherbremszylinder, auch Kombizylinder genannt, dargestellt. Ein solcher Kombizylinder besteht aus einem Betriebsbremszylinder und aus einem mit diesem baulich und funktionell verbundenen Federspeicherbremszylinder 1. Der hier nicht gezeigte Betriebsbremszylinder und der Federspeicherbremszylinder 1 sind durch eine nicht gezeigte Zwischenwand voneinander getrennt. Innerhalb des Federspeicherbremszylinders 1 ist ein Federspeicherbremskolben 2 verschiebbar angeordnet, wobei an einer Seite des Federspeicherbremskolbens 2 eine Speicherfeder 4 anliegt. Die Speicherfeder 4 stützt sich an ihrer entgegengesetzten Seite am Boden 6 des Federspeicherbremszylinders 1 ab. Zwischen dem Federspeicherbremskolben 2 und der Zwischenwand ist eine Federspeicherbremskammer 8 ausgebildet, welche zum Zuspannen des Federspeicherbremszylinders 1 entlüftet und zum Lösen belüftet wird. Bei Belüftung wird der Federspeicherbremskolben 2 unter Verspannung der Speicherfeder 4 axial in Lösestellung verschoben. Diese Situation ist in Fig.5 gezeigt. Wird dagegen zum Zwecke der Abbremsung, z.B. zum Feststellbremsen die Federspeicherbremskammer 8 entlüftet, dann vermag die Speicherfeder 4 den Federspeicherbremskolben 2 in Zuspannstellung zu verschieben, wie in Fig.6 gezeigt ist. Auf der von der Federspeicherbremskammer 8 weg weisenden Seite des Federspeicherbremskolbens 2 ist eine die Speicherfeder 4 aufnehmende Federkammer 10 ausgebildet. Die Funktionsweise eines solchen Federspeicherbremszylinders 4 bzw. eines solchen Kombizylinders ist hinreichend bekannt. Deshalb soll hier nicht weiter darauf eingegangen werden.

Das Volumen dieser Federkammer 10 verkleinert sich beim Lösen des Federspeicherbremszylinders 1 (Fig.5) und vergrößert sich beim Zuspannen (Fig.6). Folglich entsteht in der Federkammer ein Unterdruck bzw. Überdruck, welcher abgebaut werden sollte, damit am Federspeicherbremskolben 2 keine Gegenkraft aufgebaut wird und auch damit über die Dichtungen des Federspeicherbremskolbens 2 mit der Innenwand des Federspeicherbremszylinders möglichst kein geräuschvoller und deshalb störender innerer Druckausgleich erfolgt. Deshalb wird im Folgenden eine äußere Atmungseinrichtung 12 des Federspeicherbremszylinders 1 beschrieben, welche zur äußeren Be- und Entlüftung der Federkammer 10 unmittelbar aus der bzw. in die Atmosphäre 18 vorgesehen ist.

Die Atmungseinrichtung 12 ist als Membranventileinrichtung mit einer elastisch beweglichen Auslassmembran 14 und einer elastisch beweglichen Einlassmembran 16 ausgebildet, wobei sich die Einlassmembran und die Auslassmembran in ihrer Grundstellung in einer in Kontakt mit einem zugeordneten Ventilsitz gekennzeichneten Schließstellung befinden und bei Vorliegen von jeweils einer einen Mindestdruckwert überschreitenden Druckdifferenz zwischen der Federkammer 10 und der Atmosphäre in eine von dem Ventilsitz abgehobene Öffnungsstellung zum Druckaufbau und Druckabbau in der Federkammer 10 gesteuert sind. In Fig.5 und Fig.6 ist die Öffnungsstellung der Einlassmembran 16 und der Auslassmembran jeweils durch eine gestrichelte Linie dargestellt.

Die Einlassmembran 16 und die Auslassmembran 14 sind räumlich getrennt voneinander ausgebildet, wobei die Einlassmembran 16 und die Auslassmembran 14 jeweils ein eigener Ventilsitz zugeordnet ist, bevorzugt in Form eines Randes einer Verbindungsöffnung 20 zwischen der Federkammer 10 und der Atmosphäre 18. Weiterhin sind beispielsweise die Einlassmembran 16 und die Auslassmembran 14 mit einem in einer zentralen Durchgangsöffnung 22 im Boden 6 der Federkammer 10 gehaltenen Grundkörper 24 verbunden.

Genauer ist der aus einem elastischen Material wie einem Elastomer bestehende Grundkörper 24 in der zentralen Durchgangsöffnung 22 im Boden 6 der Federkammer 10 mittels eines einen hinterschnittenen Querschnitt aufweisenden Halteabschnitts 26 formschlüssig gehalten, wobei sich der Halteabschnitt 26 beim Einsetzen des Grundkörpers 24 in die Durchgangsöffnung 22 von außen her elastisch verformt, um im montiertem Endzustand einen inneren Rand der Durchgangsöffnung 22 übergreifend ins Innere der Federkammer 10 hinein ragt. Hierzu ist der Halteabschnitt 26 des Grundkörpers 24 beispielsweise kegelförmig ausgebildet und verjüngt sich zum Inneren der Federkammer 10 hin.

Ferner ist die Einlassmembran 16 an einer ins Innere der Federkammer 10 weisenden Bodenfläche des Grundkörpers 24 und die Auslassmembran 14 an einer nach außen, d.h. zur Atmosphäre 18 weisenden Außenfläche des Grundkörpers 24 angeordnet, wobei die Einlassmembran 16 und die Auslassmembran 14 vorzugsweise mit jeweils zugeordneten Verbindungsöffnungen 20 zwischen der Federkammer 10 und der Atmosphäre 18 dichtend zusammenwirken.

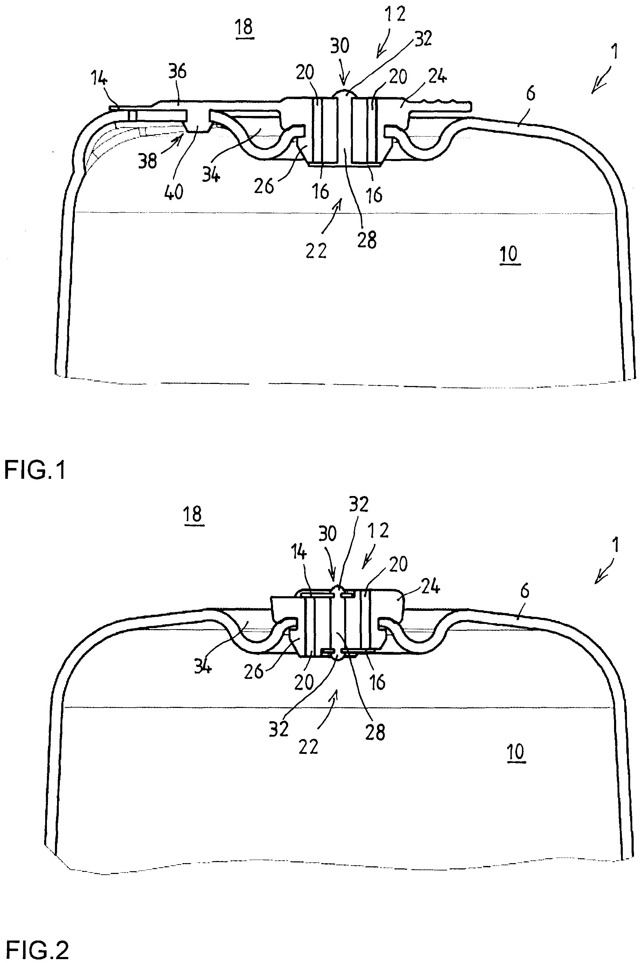

Gemäß der in Fig.1 und Fig.3 bis Fig.6 gezeigten ersten Ausführungsform der Atmungseinrichtung 12 sind beispielsweise wenigstens eine Verbindungsöffnung 20 im Boden 6 des Federspeicherbremszylinders 1 und wenigstens eine Verbindungsöffnung 20 in dem Grundkörper 24 ausgebildet. Genauer sind beispielsweise als Durchgangsbohrungen eine Verbindungsöffnung 20 im Boden 6 des Federspeicherbremszylinders 1 und mehrere, insbesondere vier Verbindungsöffnungen 20 im Grundkörper 24 ausgebildet. Dabei kann die Verbindungsöffnung 20 im Boden 6 beispielsweise mit der Auslassmembran 14 und die Verbindungsöffnungen 20 im Grundkörper 24 mit der Einlassmembran 16 zusammen wirken.

Besonders bevorzugt ist bei beiden Ausführungsformen gemäß Fig.1 und Fig.3 bis Fig.6 einerseits und Fig.2 andererseits die Einlassmembran 16 mit einem im Grundkörper 24 gehaltenen Haltestift 28 verbunden und ragt von dem Haltestift 28 radial rechtwinkelig weg.

Gemäß der in Fig.2 gezeigten zweiten Ausführungsform sind die Verbindungsöffnungen 20 allesamt in dem Grundkörper 24 ausgebildet, wobei dann die Einlassmembran 16 mit einer Verbindungsöffnung 20 oder mit einer Gruppe von Verbindungsöffnungen 20 und die Auslassmembran 14 mit einer weiteren Verbindungsöffnung 20 oder einer weiteren Gruppe von Verbindungsöffnungen 20 zusammen wirkt.

Gemäß der ersten Ausführungsform von Fig.1 und Fig.3 bis Fig.6 kann die Einlassmembrane 16 als mit aus einem elastischen Material hergestellten Haltestift 28 einstückige Tellermembrane ausgebildet sein, welche von einem ins Innere der Federkammer 10 weisenden Ende des Haltestifts 28 nach radial außen wegragend einen freien Tellermembranrand ausbildet, welcher mit mehreren vom Haltestift 28 radial und beispielsweise gleichbeabstandeten Verbindungsöffnungen 20 im Grundkörper 24 im Sinne eines Membranventils dichtend zusammenwirkt.

Dabei ist der Haltestift 28 beispielsweise eine zentrale Durchgangsbohrung 30 des Grundkörpers 24 durchragend mit einem im Querschnitt erweiterten und nach außen weisenden Kopfstück 32 im Grundkörper 24 formschlüssig gehalten, wobei sich das Kopfstück 32 und/oder der Grundkörper 24 beim Einsetzen des Haltestifts 28 in die Durchgangsbohrung 30 des Grundkörpers 24 elastisch verformt, um im montiertem Endzustand einen äußeren Rand der Durchgangsbohrung 30 des Grundkörpers 24 formschlüssig zu übergreifen.

Wie aus Fig.1 und Fig.3 bis Fig.6 hervorgeht, ist bei der ersten Ausführungsform die Auslassmembran 14 beispielsweise an einem eine ringförmige Vertiefung 34 in einer Außenfläche des Bodens 6 des Federspeicherbremszylinders 1 überbrückenden Steg 36 des Grundkörpers 24 endseitig ausgebildet und wirkt mit einem äußeren Ventilsitz am Rand der Verbindungsöffnung 20 des Bodens 6 des Federspeicherbremszylinders 1 zusammen. Dabei sind der Steg 36 und die Auslassmembran 14 mit dem Grundkörper 24 bevorzugt einstückig und aus elastischem Material wie Elastomer ausgeführt. Weiterhin ist der Steg 36 zwischen der endseitigen Auslassmembran 14 und der Vertiefung 34 im Boden 6 des Federspeicherbremszylinders 1 an diesem durch einen vom Steg 36 wegragenden und in einer Bohrung 38 formschlüssig gehalterten Zapfen 40 gehalten. Dieser Zapfen 40 weist einen im Durchmesser erweiterten Kopf auf und wird ebenfalls unter elastischer Verformung in die Bohrung 38 axial eingesetzt, um im montierten Zustand dichtend und formschlüssig in der Bohrung 38 aufgenommen zu werden.

Folglich wird bei der ersten Ausführungsform zunächst der Haltestift 28 zusammen mit der an ihn angeformten Einlassmembran 16 in die Durchgangsöffnung 22 im Grundkörper 24 unter Ausbildung eines Formschlusses gesteckt. Dadurch gelangt die Einlassmembran 16 gleichzeitig in Kontakt mit den Rändern der Verbindungsöffnungen 20 im Grundkörper 24, um diese in Schließstellung dichtend zu verschließen. Dann wird der Grundkörper 24 zusammen mit an ihn angeformter Auslassmembran 14, angeformtem Steg 36 sowie angeformtem Zapfen 40 am Federspeicherbremszylinder 1 montiert, indem der kegelige Halteabschnitt 26 des Grundkörpers 24 in die Durchgangsöffnung 22 im Boden 6 des Federspeicherbremszylinders 1 sowie der Zapfen 40 in die Bohrung 38 unter elastischer Verformung gesteckt wird, um im montierten Zustand jeweils einen Formschluss auszubilden. Dadurch gelangt zugleich die Auslassmembran 14 in Kontakt mit dem Rand der Verbindungsöffnung 20 im Boden 6 des Federspeicherbremszylinders 1, um diese in Schließstellung dichtend zu verschließen.

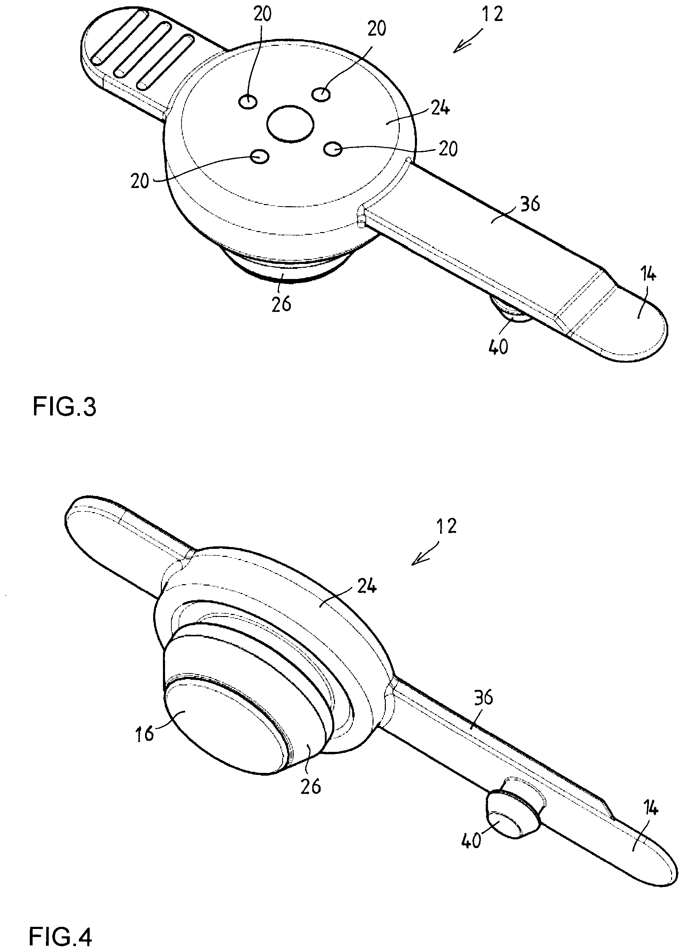

Insbesondere geht aus Fig.3 und Fig.4 hervor, dass die Atmungseinrichtung 12 einen am Federspeicherbremszylinder 1 lediglich durch Einstecken des angeformten Halteabschnitts 26 und des angeformten Zapfens 40 in die zugeordnete Durchgangsöffnung 22 bzw. Bohrung 38 im Boden 6 montierbaren und aus einem elastischen Material wie einem Elastomer bestehenden, einstückigen Grundkörper 24 beinhaltet, an welchem zudem auch die Durchgangsöffnungen 20 sowie wenigstens eine lippenartige Auslassmembran 14 bereits angeformt sind. Weiterhin beinhaltet die Atmungseinrichtung 12 den im oder am Grundkörper 24 gehaltenen Haltestift 28 zusammen mit der an ihn angeformten tellerförmigen Einlassmembran 16. Ebenso könnte die Einlassmembran 16 jedoch auch lippenartig ausgeformt sein.

Gemäß der zweiten, in Fig.2 gezeigten Ausführungsform ragen die Einlassmembran 16 und die Auslassmembran 14 im Querschnitt gesehen gegenläufig vom Haltestift 28 nach radial außen weg und wirken mit diametral gegenüberliegenden Verbindungsöffnungen 20 im Grundkörper 24 zusammen. Gemäß der zweiten Ausführungsform ist auch vorgesehen, dass am Haltestift 28 jeweils endseitig Einschnürungen und im Durchmesser demgegenüber vergrößerte Kopfstücke 32 einstückig ausgebildet sind, wobei die Kopfstücke 32 durch Öffnungen der Einlassmembran 16 und der Auslassmembran 14 unter elastischer Verformung gesteckt sind, zur Ausbildung jeweils eines Formschlusses mit hinterschnittenem Querschnitt zwischen dem Haltestift 28 einerseits und der Einlass- sowie Auslassmembran 16, 14 andererseits. Die derart am Haltestift 28 befestigte Einlassmembrane 16 und Auslassmembrane 14 bilden dann zugleich eine Axialsicherung für den Haltestift 28 in der Durchgangsbohrung 30 des Grundkörpers 24 aus.

Bei dieser Zweiten Ausführungsform beinhaltet die Atmungseinrichtung 12 daher ebenfalls einen am Federspeicherbremszylinder 1 lediglich durch Einstecken des angeformten Halteabschnitts 26 in die zugeordnete Durchgangsöffnung 22 im Boden 6 montierbaren und aus einem elastischen Material wie einem Elastomer bestehenden einstückigen Grundkörper 24, an welchem sämtliche Durchgangsöffnungen 20 bereits angeformt sind. Weiterhin beinhaltet die Atmungseinrichtung 12 den im oder am Grundkörper 24 gehaltenen Haltestift 28 zusammen mit der an ihn angeformten Einlassmembran 16 und Auslassmembran 14.

Zur Montage der Atmungseinrichtung 12 wird daher zunächst der Haltestift 28 in die Durchgangsbohrung 30 im Grundkörper 24 eingeschoben und dann an ihm endseitig die Einlassmembran 16 (innen) und die Auslassmembran 14 (außen) befestigt. Anschließend wird der Grundkörper 24 mit montierter Einlassmembran 16 und Auslassmembran 14 mit seinem Halteabschnitt 26 wie bereits beim ersten Ausführungsbeispiel beschrieben, in der Durchgangsöffnung 22 im Boden 6 des Federspeicherbremszylinders 1 formschlüssig befestigt.

Beiden Ausführungsformen ist daher ein einstückiger Grundkörper 24 aus einem elastischen Material gemeinsam, mit einem Halteabschnitt 26, welcher unter elastischer Verformung in einer zugeordneten Durchgangsöffnung 22 im Boden 6 des Federspeicherzylinders formschlüssig montierbar ist und an welchen optional bereits die Auslassmembran 14 angeformt sein kann. Weiterhin ist in einer Bohrung 30 des Grundkörpers 24 ein Haltestift 28 gehalten, an welchen wenigstens eine Einlassmembran 16 und/oder wenigstens eine Auslassmembran 14 angeformt ist, welche mit in dem Grundkörper 24 ausgebildeten Verbindungsöffnungen jeweils als Membranventil zusammen wirken. Der Haltestift 28 wird unter elastischer Verformung der Bohrung 30 am Grundkörper 24 montiert.

Die Erfindung ist nicht auf eine Einlassmembran 16 oder eine Auslassmembran 14 beschränkt. Vielmehr können jeweils mehrere Einlass- und Auslassmembrane 16, 14 vorgesehen werden. Weiterhin kann der Federspeicherbremszylinder 1 anstatt als Bestandteil eines kombinierten Betriebsbrems- und Federspeicherbremszylinders auch als separater Federspeicherbremszylinder ausgeführt sein.

### Bezugszeichenliste

- 1: Federspeicherbremszylinder
- 2: Federspeicherbremskolben
- 4: Speicherfeder
- 6: Boden
- 8: Federspeicherbremskammer
- 10: Federkammer
- 12: Atmungseinrichtung
- 14: Auslassmembran
- 16: Einlassmembran
- 18: Atmosphäre
- 20: Verbindungsöffnung
- 22: Durchgangsöffnung
- 24: Grundkörper
- 26: Halteabschnitt
- 28: Haltestift
- 30: Durchgangsbohrung
- 32: Kopfstück
- 34: Vertiefung
- 36: Steg
- 38: Bohrung
- 40: Zapfen

## Patentansprüche

1. Federspeicherbremszylinder (1) für Bremsanlagen von Fahrzeugen, mit einem im Gehäuse des Federspeicherbremszylinders (1) angeordneten, durch wenigstens eine Speicherfeder (4) betätigbaren Federspeicherbremskolben (2), welcher eine die Speicherfeder (4) beinhaltende Federkammer (10) von einer zum Lösen belüftbaren und zum Zuspannen entlüftbaren Federspeicherbremskammer (8) des Federspeicherbremszylinders (1) trennt, wobei eine Atmungseinrichtung (12) wenigstens zur Entlüftung der Federkammer (10) unmittelbar in die Atmosphäre (18) vorgesehen ist, wobei die Atmungseinrichtung (12) als Membranventileinrichtung mit wenigstens einer elastisch beweglichen Auslassmembran (14) und wenigstens einer elastisch beweglichen Einlassmembran (16) ausgebildet ist, wobei sich die Einlassmembran (16) und die Auslassmembran (14) in ihrer Grundstellung in einer in Kontakt mit einem zugeordneten Ventilsitz (20) gekennzeichneten Schließstellung befinden und bei Vorliegen von jeweils einer einen Mindestdruckwert überschreitenden Druckdifferenz zwischen der Federkammer (10) und der Atmosphäre (18) in eine von dem Ventilsitz (20) abgehobene Öffnungsstellung zum Druckaufbau und Druckabbau in der Federkammer (10) gesteuert sind, **dadurch gekennzeichnet, dass**
a) die wenigstens eine Einlassmembran (16) und die wenigstens eine Auslassmembran (14) mit einem in einer zentralen Durchgangsöffnung (22) im Boden (6) der Federkammer (10) gehaltenen Grundkörper (24) verbunden sind, welcher aus einem elastischen Material einstückig ausgebildet ist, mit einem Halteabschnitt (26), welcher unter elastischer Verformung in der zugeordneten Durchgangsöffnung (22) im Boden (6) des Federspeicherzylinders (1) formschlüssig montiert ist, wobei
b) am Grundkörper (24) ein Haltekörper (28) gehalten ist, an welchen die wenigstens eine Einlassmembran (16) und/oder die wenigstens eine Auslassmembran (14) angeformt ist, welche mit wenigstens einer in dem Grundkörper (24) ausgebildeten Verbindungsöffnung (20) zwischen der Federkammer (10) und der Atmosphäre (18) jeweils als Membranventil zusammen wirkt.

2. Federspeicherbremszylinder nach Anspruch 1, **dadurch gekennzeichnet, dass** die wenigstens eine Einlassmembran (16) und die wenigstens eine Auslassmembran (14) getrennt voneinander ausgebildet sind, wobei der Einlassmembran (16) und der Auslassmembran (14) jeweils ein eigener Ventilsitz (20) zugeordnet ist.

3. Federspeicherbremszylinder nach Anspruch 1 oder 2, **dadurch gekennzeichnet, dass** der Grundkörper (24) in der Durchgangsöffnung (22) im Boden (6) der Federkammer (10) mittels des einen hinterschnittenen Querschnitt aufweisenden Halteabschnitts (26) formschlüssig gehalten ist, wobei sich der Halteabschnitt (26) beim Einsetzen des Grundkörpers (24) in die Durchgangsöffnung (22) von außen her elastisch verformt, um im montiertem Endzustand einen inneren Rand der Durchgangsöffnung (22) übergreifend ins Innere der Federkammer (10) hinein ragt.

4. Federspeicherbremszylinder nach Anspruch 3, **dadurch gekennzeichnet, dass** der Halteabschnitt (26) des Grundkörpers (24) kegelförmig ausgebildet ist und sich zum Inneren der Federkammer (10) hin verjüngt.

5. Federspeicherbremszylinder nach Anspruch 4, **dadurch gekennzeichnet, dass** die wenigstens eine Einlassmembrane (16) an einer ins Innere der Federkammer (10) weisenden Bodenfläche des Grundkörpers (24) und die wenigstens eine Auslassmembran (14) an einer nach außen weisenden Außenfläche des Grundkörpers (24) angeordnet ist.

6. Federspeicherbremszylinder nach Anspruch 5, **dadurch gekennzeichnet, dass** die wenigstens eine Einlassmembrane (16) und die wenigstens eine Auslassmembrane (14) mit mehreren Verbindungsöffnungen (20) zwischen der Federkammer (10) und der Atmosphäre (18) dichtend zusammenwirken.

7. Federspeicherbremszylinder nach einem der Ansprüche 1 bis 6, **dadurch gekennzeichnet, dass** mehrere Verbindungsöffnungen (20) in dem Grundkörper (24) ausgebildet sind oder wenigstens eine Verbindungsöffnung (20) in dem Grundkörper (24) und wenigstens eine Verbindungsöffnung (20) in dem Boden (6) des Federspeicherbremszylinders (1) ausgebildet ist.

8. Federspeicherbremszylinder nach einem der Ansprüche 1 bis 7, **dadurch gekennzeichnet, dass** die wenigstens eine Einlassmembran (16) mit einem im Grundkörper (24) gehaltenen Haltestift (28) verbunden ist und von dem Haltestift (28) radial rechtwinkelig wegragt.

9. Federspeicherbremszylinder nach Anspruch 8, **dadurch gekennzeichnet, dass** die Einlassmembran (16) als mit aus einem elastischen Material hergestellten Haltestift (28) einstückige Tellermembrane ausgebildet ist, welche von einem ins Innere der Federkammer (10) weisenden Ende des Haltestifts (28) nach radial außen wegragend einen freien Tellermembranrand ausbildet, welcher mit mehreren vom Haltestift (28) radial beabstandeten Verbindungsöffnungen (20) im Grundkörper (24) dichtend zusammenwirkt.

10. Federspeicherbremszylinder nach Anspruch 9, **dadurch gekennzeichnet, dass** der Haltestift (28) eine zentrale Durchgangsbohrung (30) des Grundkörpers (24) durchragend mit einem im Querschnitt erweiterten und nach außen weisenden Kopfstück (32) im Grundkörper (24) formschlüssig gehalten ist, wobei sich das Kopfstück (32) und/oder der Grundkörper (24) beim Einsetzen des Haltestifts (28) in die Durchgangsbohrung (30) des Grundkörpers (24) elastisch verformt, um im montiertem Endzustand einen äußeren Rand der Durchgangsbohrung (30) des Grundkörpers (24) formschlüssig zu übergreifen.

11. Federspeicherbremszylinder nach einem der Ansprüche 1 bis 10, **dadurch gekennzeichnet, dass** die wenigstens eine Auslassmembran (14) an einem eine ringförmige Vertiefung (34) in einer Außenfläche des Bodens (6) des Federspeicherbremszylinders (1) überbrückenden Steg (36) des Grundkörpers (24) endseitig lippenförmig ausgebildet ist und mit wenigstens einem äußeren Ventilsitz am Rand wenigstens einer Verbindungsöffnung (20) im Boden (6) des Federspeicherbremszylinders (1) zusammenwirkt, wobei der Steg (36) und die wenigstens eine Auslassmembran (14) mit dem Grundkörper (24) einstückig ausgeführt sind.

12. Federspeicherbremszylinder nach Anspruch 11, **dadurch gekennzeichnet, dass** der Steg (36) zwischen der Auslassmembran (14) und der Vertiefung (34) im Boden (6) des Federspeicherbremszylinders (1) am Boden (6) durch einen vom Steg (36) wegragenden und in einer Bohrung (38) im Boden (6) formschlüssig gehalterten Zapfen (40) gehalten ist.

13. Federspeicherbremszylinder nach Anspruch 8, **dadurch gekennzeichnet, dass** die wenigstens eine Einlassmembran (16) und die wenigstens eine Auslassmembran (14) im Querschnitt gesehen gegenläufig vom Haltestift (28) nach radial außen weg ragen und mit diametral gegenüberliegenden Verbindungsöffnungen (20) im Grundkörper (24) zusammenwirken.

14. Federspeicherbremszylinder nach Anspruch 13, **dadurch gekennzeichnet, dass** am Haltestift (28) jeweils endseitig Einschnürungen und im Durchmesser demgegenüber vergrößerte Kopfstücke (32) einstückig ausgebildet sind, wobei die Kopfstücke (32) durch Öffnungen der Einlassmembran (16) und der Auslassmembran (14) unter elastischer Verformung gesteckt sind, zur Ausbildung jeweils eines Formschlusses mit hinterschnittenem Querschnitt zwischen dem Haltestift (28) einerseits und Einlassmembran (16) und Auslassmembran (14) andererseits, und wobei die derart am Haltestift (28) befestigte Einlassmembran (16) und Auslassmembran (14) zugleich eine Axialsicherung für den Haltestift (28) in der Durchgangsbohrung (30) des Grundkörpers (24) ausbilden.

15. Kombinierter Betriebsbrems- und Federspeicherbremszylinder (1) für Bremsanlagen von Fahrzeugen beinhaltend einen Federspeicherbremszylinder (1) nach einem der vorhergehenden Ansprüche.

## Claims

1. Spring brake cylinder (1) for brake installations of vehicles, having a spring brake piston (2) which is arranged in the housing of the spring brake cylinder (1) and which can be actuated by means of at least one preloaded spring (4), and which separates a spring chamber (10) which contains the preloaded spring (4) from a spring brake chamber (8) of the spring brake cylinder (1), which chamber can be ventilated for release and which can be vented for deployment, wherein a circulation device (12) at least for venting the spring chamber (10) directly to the atmosphere (18) is provided, wherein the circulation device (12) is constructed as a diaphragm valve device having at least one resiliently movable outlet diaphragm (14) and at least one resiliently movable inlet diaphragm (16), wherein the inlet diaphragm (16) and the outlet diaphragm (14) in their basic position are in a closure position which is **characterized in** contact with an associated valve seat (20) and, in the event of a pressure difference which exceeds a respective minimum pressure value between the spring chamber (10) and the atmosphere (18), are controlled into an open position raised from the valve seat (20) in order to increase pressure and decrease pressure in the spring chamber (10), **characterized in that**
a) the at least one inlet diaphragm (16) and the at least one outlet diaphragm (14) are connected to a base member (24) which is retained in a central through-opening (22) in the base (6) of the spring chamber (10) and which is constructed in an integral manner from a resilient material, having a retention portion (26) which can be assembled in a positive-locking manner with resilient deformation in the associated through-opening (22) in the base (6) of the spring cylinder (1), wherein
b) there is retained on the base member (24) a retention member (28) on which there is formed the at least one inlet diaphragm (16) and/or the at least one outlet diaphragm (14) which cooperates in each case as a diaphragm valve with at least one connection opening (20) formed in the base member (24) between the spring chamber (10) and the atmosphere (18).

2. Spring brake cylinder according to Claim 1, **characterized in that** the at least one inlet diaphragm (16) and the at least one outlet diaphragm (14) are constructed so as to be separated from each other, wherein a separate valve seat (20) is associated with the inlet diaphragm (16) and the outlet diaphragm (14) respectively.

3. Spring brake cylinder according to Claim 1 or 2, **characterized in that** the base member (24) is retained in a positive-locking manner in the through-opening (22) in the base (6) of the spring chamber (10) by means of the retention portion (26) which has an undercut cross-section, wherein the retention portion (26) is resiliently deformed from the outer side when the base member (24) is introduced into the through-opening (22) in order, in the assembled end state, protrudes inside the spring chamber (10) in a manner engaging over an inner edge of the through-opening (22).

4. Spring brake cylinder according to Claim 3, **characterized in that** the retention portion (26) of the base member (24) is constructed in a conical manner and tapers in the direction toward the inner side of the spring chamber (10).

5. Spring brake cylinder according to Claim 4, **characterized in that** the at least one inlet diaphragm (16) is arranged on a base face of the base member (24), which face is directed inside the spring chamber (10), and the at least one outlet diaphragm (14) is arranged on an outwardly facing outer face of the base member (24).

6. Spring brake cylinder according to Claim 5, **characterized in that** the at least one inlet diaphragm (16) and the at least one outlet diaphragm (14) cooperate with a plurality of connection openings (20) between the spring chamber (10) and the atmosphere (18) in a sealing manner.

7. Spring brake cylinder according to one of Claims 1 to 6, **characterized in that** a plurality of connection openings (20) are formed in the base member (24) or at least one connection opening (20) is formed in the base member (24) and at least one connection opening (20) is formed in the base (6) of the spring brake cylinder (1).

8. Spring brake cylinder according to one of Claims 1 to 7, **characterized in that** the at least one inlet diaphragm (16) is connected to a retention pin (28) which is retained in the base member (24) and protrudes radially at right angles from the retention pin (28).

9. Spring brake cylinder according to Claim 8, **characterized in that** the inlet diaphragm (16) is constructed as a disc diaphragm which is integral with a retention pin (28) produced from a resilient material and which, from an end of the retention pin (28) directed inside the spring chamber (10) in a manner protruding radially outward, forms a free disc diaphragm edge which cooperates in a sealing manner with a plurality of connection openings (20) in the base member (24) which are radially spaced from the retention pin (28).

10. Spring brake cylinder according to Claim 9, **characterized in that** the retention pin (28) is retained in the base member (24) in a positive-locking manner so as to protrude through a central through-hole (30) of the base member (24) with a head piece (32) which is expanded in cross-section and which faces outward, wherein the head piece (32) and/or the base member (24) is/are resiliently deformed when the retention pin (28) is inserted into the through-hole (30) of the base member (24) in order in the assembled end state to engage over an outer edge of the through-hole (30) of the base member (24) in a positive-locking manner.

11. Spring brake cylinder according to one of Claims 1 to 10, **characterized in that** the at least one outlet diaphragm (14) is formed at the end side in the manner of a lip on a web (36) of the base member (24), which web bridges an annular recess (34) in an outer face of the base (6) of the spring brake cylinder (1), and cooperates with at least one outer valve seat at the edge of at least one connection opening (20) in the base (6) of the spring brake cylinder (1), wherein the web (36) and the at least one outlet diaphragm (14) are constructed integrally with the base member (24).

12. Spring brake cylinder according to Claim 11, **characterized in that** the web (36) between the outlet diaphragm (14) and the recess (34) in the base (6) of the spring brake cylinder (1) is retained on the base (6) by means of a pin (40) which protrudes away from the web (36) and which is retained in a hole (38) in the base (6) in a positive-locking manner.

13. Spring brake cylinder according to Claim 8, **characterized in that** the at least one inlet diaphragm (16) and the at least one outlet diaphragm (14), when viewed in cross-section, protrude in opposite directions away from the retention pin (28) in a radially outward direction and cooperate with diametrically opposing connection openings (20) in the base member (24).

14. Spring brake cylinder according to Claim 13, **characterized in that** there are formed integrally on the retention pin (28) at the end side in each case contractions and head pieces (32) which are increased in terms of diameter with respect thereto, wherein the head pieces (32) are inserted through openings of the inlet diaphragm (16) and the outlet diaphragm (14) with resilient deformation, in order to form a positive-locking connection with an undercut cross-section between the retention pin (28), on the one hand, and the inlet diaphragm (16) and outlet diaphragm (14), on the other hand, and wherein the inlet diaphragm (16) and outlet diaphragm (14) which are secured to the retention pin (28) in this manner at the same time form an axial securing member for the retention pin (28) in the through-hole (30) of the base member (24).

15. Combined service brake and spring brake cylinder (1) for brake installations of vehicles containing a spring brake cylinder (1) according to one of the preceding claims.

## Revendications

1. Cylindre (1) de frein à ressort accumulateur pour des systèmes de freinage de véhicules, comprenant un piston (2) de frein à ressort accumulateur, qui est disposé dans l'enveloppe du cylindre (1) de frein à ressort accumulateur, qui peut être actionné par au moins un ressort (4) accumulateur et qui sépare une chambre (10) de ressort contenant le ressort (4) accumulateur d'une chambre (8), pouvant être alimentée en air pour le serrage et pouvant être purgée pour le desserrage, du cylindre (1) de frein à ressort accumulateur, dans lequel il est prévu un dispositif (12) de mise à l'atmosphère, au moins pour purger la chambre (10) du ressort directement à l'atmosphère (18), dans lequel le dispositif (12) de mise à l'atmosphère est constitué sous la forme d'un dispositif de soupape à membrane ayant au moins une membrane (14) de sortie mobile élastiquement et au moins une membrane (16) d'entrée mobile élastiquement, la membrane (16) d'entrée et la membrane (14) de sortie se trouvant, dans leur position de base, dans une position de fermeture **caractérisée par** le contact avec un siège (20) de soupape associé et, en présence d'une différence de pression dépassant une valeur minimum de pression entre la chambre (10) du ressort et l'atmosphère (8), étant mises, dans une position d'ouverture, soulevée du siège (20) de la soupape, pour la remontée de la pression et la suppression de la pression dans la chambre (10) du ressort, **caractérisé en ce que**
a) la au moins une membrane (16) d'entrée et la au moins une membrane (14) de sortie sont reliées à un corps (24) de base, qui est retenu dans une ouverture (22) centrale de traversée du fond (6) de la chambre (10) du ressort et qui est constitué d'une seule pièce en une matière élastique, comprenant une partie (26) de retenue, qui est montée à complémentarité de forme, avec déformation élastique, dans l'ouverture (22) associée de traversée du fond (6) du cylindre (1) à ressort accumulateur, dans lequel
b) sur le corps (24) de base est retenu un corps (28) de retenue, sur lequel est formée la au moins une membrane (16) d'entrée et/ou la au moins une membrane (14) de sortie, laquelle coopère, respectivement, sous la forme d'une soupape à membrane, avec au moins une ouverture (20) de communication, constituée dans le corps (24) de base, entre la chambre (10) du ressort et l'atmosphère (18).

2. Cylindre de frein à ressort accumulateur suivant la revendication 1, **caractérisé en ce que** la au moins une membrane (16) d'entrée et la au moins une membrane (14) de sortie sont constituées en étant séparées l'une de l'autre, la membrane (16) d'entrée et la membrane (14) de sortie étant associées chacune à leur propre siège (20) de soupape.

3. Cylindre de frein à ressort accumulateur suivant la revendication 1 ou 2, **caractérisé en ce que** le corps (24) de base est retenu à complémentarité de forme dans l'ouverture (22) de traversée du fond (6) de la chambre (10) de ressort, au moyen de la partie (26) de retenue ayant une section transversale en contre-dépouille, la partie (26) de retenue étant déformée élastiquement lors de l'insertion du corps (24) de base dans l'ouverture (22) de traversée de l'extérieur pour pénétrer, à l'état final monté, en chevauchant un bord intérieur de l'ouverture (22) de traversée à l'intérieur de la chambre (10) du ressort.

4. Cylindre de frein à ressort accumulateur suivant la revendication 3, **caractérisé en ce que** la partie (26) de retenue du corps (24) de base est conique et se rétrécit en allant vers l'intérieur de la chambre (10) du ressort.

5. Cylindre de frein à ressort accumulateur suivant la revendication 4, **caractérisé en ce que** la au moins une membrane (16) d'entrée est montée sur une surface de fond, tournée vers l'intérieur de la chambre (10) du ressort, du corps (24) de base, et la au moins une membrane (14) de sortie sur une surface extérieure, tournée vers l'extérieur, du corps (24) de base.

6. Cylindre de frein à ressort accumulateur suivant la revendication 5, **caractérisé en ce que** la au moins une membrane (10) d'entrée et la au moins une membrane (14) de sortie coopèrent d'une manière étanche avec plusieurs ouvertures (20) de communication entre la chambre (10) du ressort et l'atmosphère (18).

7. Cylindre de frein à ressort accumulateur suivant l'une des revendications 1 à 6, **caractérisé en ce que** plusieurs ouvertures (20) de communication sont constituées dans le corps (24) de base ou au moins une ouverture (20) de communication est constituée dans le corps (24) de base et au moins une ouverture (20) de communication est constituée dans le fond (6) du cylindre (1) de frein à ressort accumulateur.

8. Cylindre de frein à ressort accumulateur suivant l'une des revendications 1 à 7, **caractérisé en ce que** la au moins une membrane (16) d'entrée est reliée à une tige (28) de retenue, retenue dans le corps (24) de base, et s'éloigne à angle droit radialement de la tige (28) de retenue.

9. Cylindre de frein à ressort accumulateur suivant la revendication 8, **caractérisé en ce que** la membrane (16) d'entrée est constituée sous la forme d'une membrane à disque d'une seule pièce ayant une tige (28) de retenue en matière élastique, membrane qui constitue un bord libre de membrane à disque s'éloignant vers l'extérieur radialement d'une extrémité tournée vers l'intérieur de la chambre (10) du ressort, de la tige (28) de retenue, bord qui coopère d'une manière étanche avec plusieurs ouvertures (20) de communication, à distance radialement de la tige (28) de retenue, du corps (24) de base.

10. Cylindre de frein à ressort accumulateur suivant la revendication 9, **caractérisé en ce que** la tige (28) de retenue est retenue à complémentarité de forme, en passant dans un trou (30) central de traversée du corps (24) de base, par une pièce (32) de tête, de section transversale agrandie et tournée vers l'extérieur, du corps (24) de base, la pièce (32) de tête et/ou le corps (24) de base étant, lors de l'insertion de la tige (28) de retenue dans le trou (30) de traversée du corps (24) de base, déformée élastiquement pour chevaucher, à complémentarité de forme, à l'état final monté, un bord extérieur du trou (30) de traversée du corps (24) de base.

11. Cylindre de frein à ressort accumulateur suivant l'une des revendication 1 à 10, **caractérisé en ce que** la au moins une membrane (14) de sortie est constituée en forme de lèvre du côté de l'extrémité sur une entretoise (36), surmontant une cavité (34) annulaire dans une surface extérieure du fond (6) du cylindre (1) de frein à ressort accumulateur, du corps (24) de base, et coopère avec au moins un siège de soupape extérieur sur le bord d'au moins une ouverture (20) de communication du fond (6) du cylindre (1) de frein à ressort accumulateur, l'entretoise (36) et la au moins une membrane (14) de sortie étant réalisées d'une seule pièce avec le corps (24) de base.

12. Cylindre de frein à ressort accumulateur suivant la revendication 11, **caractérisé en ce que** l'entretoise (36) est retenue entre la membrane (14) de sortie et la cavité (34) du fond (6) du cylindre (1) de frein à ressort accumulateur au fond (6) par un tenon (40) s'éloignant de l'entretoise (36) et retenu à complémentarité de forme dans un trou (38) du fond (6).

13. Cylindre de frein à ressort accumulateur suivant la revendication 8, **caractérisé en ce que** la au moins une membrane (16) d'entrée et la au moins une membrane (14) de sortie s'éloignent vers l'extérieur radialement, considéré en section transversale, en sens contraire de la tige (28) de retenue, et coopèrent avec des ouvertures (20) de communication opposées diamétralement du corps (24) de base.

14. Cylindre de frein à ressort accumulateur suivant la revendication 13, **caractérisé en ce que**, sur la tige (28) de retenue, sont constitués d'une seule pièce, respectivement, des resserrements du côté de l'extrémité et des pièces (32) de tête agrandies en revanche en diamètre, les pièces (32) de tête étant enfilées avec déformation élastique dans des ouvertures de la membrane (16) d'entrée et de la membrane (14) de sortie, pour constituer, respectivement, une complémentarité de forme avec une section transversale en contre-dépouille entre la tige (28) de retenue d'une part et la membrane (16) d'entrée et la membrane (14) de sortie d'autre part, la membrane (16) d'entrée et la membrane (14) de sortie ainsi fixées à la tige (28) de retenue constituant, en même temps, une fixation axiale de la tige (28) de retenue dans le trou (30) de traversée du corps (24) de base.

15. Cylindre (1) de frein de service et de frein à ressort accumulateur combinés pour des systèmes de freinage de véhicules comportant un cylindre (1) de frein à ressort accumulateur suivant l'une des revendications précédentes.
